# EUROPÄISCHE PATENTSCHRIFT

(11) **EP 2 995 557 B1**
(45) Veröffentlichungstag und Bekanntmachung des Hinweises auf die Patenterteilung: **20.06.2018**
(21) Anmeldenummer: 15184891.8
(22) Anmeldetag: 11.09.2015
(51) Int. Cl.: B64D 33/02, F02C 7/045

(54) **SCHALLDÄMPFENDE ANORDNUNG FÜR EINE TRIEBWERKSGONDEL UND TRIEBWERKSGONDEL MIT EINER SOLCHEN ANORDNUNG**
SOUND DAMPING ASSEMBLY FOR AN AIRCRAFT ENGINE NACELLE AND NACELLE EQUIPPED WITH SUCH AN ASSEMBLY
SYSTEME A ISOLATION ACOUSTIQUE POUR UNE NACELLE DE REACTEUR ET NACELLE DE REACTEUR DOTEE D'UN TEL AGENCEMENT

(30) Priorität: 12.09.2014 DE 102014218350
(43) Veröffentlichungstag der Anmeldung: 16.03.2016
(73) Patentinhaber: Rolls-Royce Deutschland Ltd & Co KG, 15827 Blankenfelde-Mahlow (DE)
(72) Erfinder: DR. RICHTER, Christoph, 12157 Berlin (DE)
(74) Vertreter: Maikowski & Ninnemann Patentanwälte Partnerschaft mbB

(56) Entgegenhaltungen:
- EP-A2- 1 482 478
- EP-A2- 2 466 095
- EP-A2- 2 620 628
- US-A1- 2003 156 940
- US-A1- 2009 266 642
- US-B2- 7 857 093

## Beschreibung

Die Erfindung betrifft eine schalldämpfende Anordnung für eine Triebwerksgondel gemäß dem Oberbegriff des Anspruchs 1 und eine Triebwerksgondel mit einer solchen Anordnung.

Moderne Flugtriebwerke verwenden zur Erzeugung von Schub einen Bläser (Fan), der vom Kerntriebwerk angetrieben wird. Der Bläser ist eine Hauptquelle von niederfrequentem Triebwerkslärm im Bereich vor dem Triebwerk, der den Kabinenkomfort negativ beeinflussen kann. Außerdem können gekoppelte aeroelastische Schwingungen auftreten, bei denen die mechanischen Schwingungen der Blattschaufeln und deren Umströmung mit dem akustischen Feld, welches sich rund um den Bläser ausbildet, in Resonanz gehen. Zur Vermeidung solcher Blattschwingungen ist es bekannt, akustische Dämpfer in eine Triebwerksgondel zu integrieren und insbesondere den Einlauf einer Triebwerksgondel mit akustischen Dämpfern zu versehen.

Aus der US 7 857 093 B2 ist eine schalldämpfende Anordnung bekannt, die eine erste schalldämpfende Wabenstruktur im Einlaufbereich einer Triebwerksgondel aufweist. Die erste schalldämpfende Wabenstruktur dient der Absorption höherer Frequenzen. Des Weiteren ist eine zweite schalldämpfende Wabenstruktur vorgesehen, die in einem tiefer gelegenen Abschnitt der Triebwerksgondel angeordnet ist und eine größere radiale Tiefe verglichen mit der ersten Wabenstruktur aufweist. Diese zweite schalldämpfende Wabenstruktur dient der Absorption tieferer Frequenzen. Nachteilig besitzt die aus der US 7 857 093 B2 bekannte schalldämpfende Anordnung ein relativ hohes Gewicht.

Aus der EP 2 466 095 A2 ist eine schalldämpfende Anordnung bekannt, die Dämpfungsstrukturen aufweist, die L-förmig ausgebildet sind, um ihre radiale Tiefe zu reduzieren und trotzdem eine Dämpfung relativ tiefer Frequenzen zu ermöglichen.

Weiterhin zeigen auch die EP 1 482 478 A2 und die EP 2 620 628 A2 vergleichbare schalldämpfende Anordnungen für ein Triebwerk.

Der vorliegenden Erfindung liegt die Aufgabe zugrunde, eine schalldämpfende Anordnung für eine Triebwerksgondel bereitzustellen, die sich durch einen einfachen Aufbau und eine effektive Schalldämpfung auszeichnet. Des Weiteren soll eine Triebwerksgondel mit einer solchen Anordnung bereitgestellt werden.

Diese Aufgabe wird erfindungsgemäß durch eine Anordnung mit den Merkmalen des Anspruchs 1 und eine Triebwerksgondel mit den Merkmalen des Anspruchs 11 gelöst. Ausgestaltungen der Erfindung sind in den Unteransprüchen angegeben.

Danach sieht die erfindungsgemäße Lösung eine schalldämpfende Anordnung vor, die eine erste Dämpfungsstruktur mit einer schalldämpfenden Wabenstruktur und eine zweite Dämpfungsstruktur ohne Wabenstruktur umfasst. Die erste Dämpfungsstruktur weist eine perforierte Innenschicht und eine Außenschicht auf, zwischen denen sich eine schalldämpfende Wabenstruktur erstreckt. Die erste Dämpfungsstruktur umfasst dabei mindestens einen ersten Abschnitt und einen zweiten Abschnitt, die in axialer Richtung hintereinander angeordnet sind.

Die zweite Dämpfungsstruktur ist ringförmig ausgebildet und grenzt im zweiten Abschnitt der ersten Dämpfungsstruktur in radialer Richtung außen an diese an. Der zweite Abschnitt der ersten Dämpfungsstruktur, an den sich in radialer Richtung die ringförmige Dämpfungsstruktur anschließt, weißt dabei in der Regel, jedoch nicht notwendigerweise eine geringere axiale Länge auf als der erste Abschnitt der ersten Dämpfungsstruktur, der nicht von der ringförmigen Dämpfungsstruktur umgeben ist. Weiter wird darauf hingewiesen, dass die erste Dämpfungsstruktur weitere Abschnitte aufweisen kann, beispielsweise einen dritten Abschnitt, der sich in axiale Richtung an den zweiten Abschnitt anschließt.

Die zweite Dämpfungsstruktur wird erfindungsgemäß durch mehrere Hohlkammern gebildet, die in Umfangsrichtung aneinander angrenzen, wobei die Hohlkammern ohne eine Wabenstruktur ausgebildet sind. Ferner weist die Wabenstruktur der ersten Dämpfungsstruktur im ersten Abschnitt zwischen der Innenschicht und der Außenschicht mindestens zwei Schichten in Wabenform auf, die durch ein perforiertes Septum voneinander getrennt sind und die Wabenstruktur der ersten Dämpfungsstruktur besitzt in dem zweiten Abschnitt, an den die zweite Dämpfungsstruktur (20) angrenzt, einen anderen Aufbau besitzt als im ersten Abschnitt.

Die erfindungsgemäße Lösung stellt eine schalldämpfende Anordnung bereit, bei der nur die erste Dämpfungsstruktur mit einer Wabenstruktur versehen ist, während die zweite Dämpfungsstruktur ohne Wabenstruktur ausgebildet ist. Hierdurch wird ein vereinfachter Aufbau bereitgestellt und erfolgt zusätzlich eine Gewichtseinsparung. Die zweite ringförmige Dämpfungsstruktur wird dabei durch mehrere Hohlkammern gebildet, die in Umfangsrichtung aneinander grenzen, so dass das Auftreten umlaufender Schallfelder innerhalb der ringförmigen Dämpfungsstruktur verhindert wird. Die Hohlkammern sind dabei erfindungsgemäß durch sich radial erstreckende und in axialer Richtung verlaufende Trennwände voneinander getrennt.

Die Bezeichnungen "axiale Richtung", "radiale Richtung" und "Umfangsrichtung" beziehen sich auf die Geometrie einer Triebwerksgondel oder anderen im Wesentlichen zylindrischen Struktur, in der die schalldämpfende Anordnung angeordnet ist.

Unter einer Wabenstruktur im Sinne der vorliegenden Erfindung wird jede Struktur verstanden, die durch ein zwei- oder dreidimensionales Array hohler, aneinander angrenzender Zellen oder Waben gebildet ist, die jeweils durch Wände begrenzt sind. Die Zellen sind in der Regel säulenförmig und besitzen eine hexagonale Grundform. Jedoch sind auch Arrays mit Zellen mit einer anderen als einer hexagonalen Grundform als Wabenstruktur im Sinne der Erfindung anzusehen.

Die Erfindung sieht ferner vor, dass die Wabenstruktur der ersten Dämpfungsstruktur in dem zweiten Abschnitt, an den die zweite Dämpfungsstruktur angrenzt, einen anderen Aufbau besitzt als im ersten Abschnitt. Hierzu ist vorgesehen, dass die erste Dämpfungsstruktur im ersten Abschnitt zwischen der Innenschicht und der Außenschicht mindestens zwei Schichten in Wabenform umfasst, die durch ein perforiertes Septum voneinander getrennt sind. Dabei kann vorgesehen sein, dass die Waben in den beiden Schichten versetzt zueinander angeordnet sind. Insbesondere können hierbei separate Waben in den beiden durch das Septum voneinander getrennten Schichten beliebig versetzt zueinander angeordnet sein.

Dagegen weist die erste Dämpfungsstruktur in dem zweiten Abschnitt, an den die zweite Dämpfungsstruktur angrenzt, zwischen der Innenschicht und der Außenschicht nur genau eine Schicht in Wabenform auf, wobei die Waben sich in dieser Schicht von der Innenschicht bis zur Außenschicht durchgehend erstrecken. Im Bereich der zweiten Dämpfungsstruktur weist die erste Dämpfungsstruktur somit eine durchgehende Wabenstruktur auf, die es ermöglicht, dass Schallwellen sich durch diese durchgehende Wabenstruktur von der perforierten Innenschicht der ersten Dämpfungsstruktur, die mit Schallwellen beaufschlagt wird, bis in die zweite ringförmige Dämpfungsstruktur fortpflanzen. Dabei bildet die Innenschicht der ersten Dämpfungsstruktur beispielsweise eine innere Auskleidung einer Triebwerksgondel.

Dabei ist gemäß einer vorteilhaften Weiterentwicklung vorgesehen, dass die Außenschicht der erste Dämpfungsstruktur im zweiten Abschnitt, an denen die erste Dämpfungsstruktur angrenzt, zumindest teilweise mit Perforationen, insbesondere Löchern versehen ist, die relativ groß ausgebildet sind. Über die Perforationen in der Außenschicht sind die erste und zweite Dämpfungsstrukturen wenigstens teilweise fluidtechnisch miteinander verbunden. Beispielsweise sind die Perforationen als Löcher mit einem Durchmesser zwischen 2 mm und 5 mm, insbesondere von etwa 4 mm ausgebildet. Des Weiteren kann vorgesehen sein, dass die Perforationen zwischen 8 % und 25% der Fläche der Außenschicht der ersten Dämpfungsstruktur in dem genannten Abschnitt ausmachen.

Die Hohlkammern der zweiten Dämpfungsstruktur sind über die relativ großen Löcher in der Außenschicht der ersten Dämpfungsstruktur mit dem Luftvolumen in den durchgehenden Waben der Wabenstruktur und des Weiteren über die Perforationen bzw. Löcher in der Innenschicht der ersten Dämpfungsstruktur mit akustischen Schwingungen gekoppelt, die sich im Einlauf der Triebwerksgondel und benachbart der Fanschaufeln ausbilden. Durch die Verwendung relativ großer Perforationen bzw. Löcher in der Außenschicht wird die Menge an träger Masse des Gases erhöht, das im zweiten Abschnitt der ersten Dämpfungsstruktur vorhanden ist und zur Übertragung von akustischen Schwingungen bewegt werden muss, so das hochfrequente Schwingungen insbesondere im Bereich von mehr als 500 Hz stärker reflektiert und in geringerem Maße in die zweite Dämpfungsstruktur eindringen können, die dementsprechend primär eine Absorption niederfrequenterer Schwingungen vornimmt, insbesondere solcher im Bereich zwischen 300 und 500 Hz.

Eine weitere Ausgestaltung sieht vor, dass die Perforationen in der Außenschicht der ersten Dämpfungsstruktur eine Anordnung aufweisen, die nicht mit der Anordnung der Waben der ersten Dämpfungsstruktur übereinstimmt. Es ist somit nicht vorgesehen, dass jede Öffnung in der Außenschicht mit einer Wabe der Wabenstruktur, die in dem zweiten Abschnitt der ersten Dämpfungsstruktur ausgebildet ist, korrespondiert bzw. dass die Öffnungen und die Waben einen gleichen Abstand aufweisen oder ein gleiches Raster bilden. Vielmehr ist gemäß dieser Ausgestaltung vorgesehen, dass eine nicht einander entsprechende Anordnung von Perforationen in der Außenschicht und Waben der Wabenstruktur vorliegt. Hierdurch bestehen zusätzliche Freiheiten in der Ausbildung der Perforationen der Außenschicht.

Eine weitere Ausgestaltung der Erfindung sieht vor, dass die Außenschicht der ersten Dämpfungsstruktur in dem zweiten Abschnitt, an den die zweite ringförmige Dämpfungsstruktur angrenzt, eine größere Dicke aufweist. Beispielsweise beträgt die Dicke der ersten Dämpfungsstruktur in diesem Bereich zwischen 1 bis 4 mm, während sie in dem ersten Abschnitt der ersten Dämpfungsstruktur nur zwischen 0,6 und 1,2 mm beträgt. Eine erhöhte Dicke der Außenschicht in dem zweiten Abschnitt trägt weiter zu dem bereits erwähnten Effekt einer verbesserten Abschirmung gegenüber höherfrequentem Triebwerkslärm durch Vergrößerung der trägen Masse bei, die zur Übertragung akustischer Schwingungen zu bewegen ist.

Gemäß einer weiteren Ausgestaltung der Erfindung ist vorgesehen, dass die perforierte Innenschicht der ersten Dämpfungsstruktur in dem zweiten Abschnitt, an den die zweite Dämpfungsstruktur angrenzt, Perforationen bzw. Öffnungen aufweist, die einen kleineren Durchmesser bzw. eine geringere Größe aufweisen als die in der Außenschicht ausgebildeten Perforationen bzw. Öffnungen. Beispielsweise sind die Perforationen der Innenschicht der ersten Dämpfungsstruktur im zweiten Abschnitt durch Löcher gebildet, die einen Durchmesser zwischen 1 und 2 mm aufweisen, während der Durchmesser der Löcher in der Außenschicht wie erwähnt bevorzugt zwischen 2 und 5 mm liegt. Die Perforationen der Innenschicht machen dabei beispielsweise zwischen 5 und 15 % der Fläche der Innenschicht der ersten Dämpfungsstruktur in dem zweiten Abschnitt aus.

Weiter kann vorgesehen sein, dass die Größe der Perforationen der Innenschicht im ersten Abschnitt und im zweiten Abschnitt unterschiedlich ist, insbesondere die Größe bzw. der Durchmesser der Perforationen im ersten Abschnitt geringer ist als im zweiten Abschnitt.

Eine weitere Ausgestaltung der Erfindung sieht vor, dass der wabenförmige Aufbau der ersten Dämpfungsstruktur in dem zweiten Abschnitt unterbrochen ist, sich in diesem Abschnitt somit überhaupt keine wabenförmige Struktur befindet. Dies stellt eine von der Konstruktion her einfache Ausführungsvariante dar, da es bei dieser Variante nicht erforderlich ist, die erste Dämpfungsstruktur im zweiten Abschnitt, an den die ringförmige Dämpfungsstruktur angrenzt, mit einer in anderer Weise aufgebauten Wabenstruktur auszubilden.

Die Hohlkammern, die in Umfangsrichtung aneinander angrenzen und die ringförmige Dämpfungsstruktur bilden, weisen in einer Ausgestaltung im Längsschnitt eine im Wesentlichen quadratische Form auf. Sie können, was ihre radiale und axiale Erstreckung angeht, verschiedene Ausgestaltungen besitzen.

So sieht ein erstes Ausführungsbeispiel vor, dass die Hohlkammern als symmetrische oder auch nicht symmetrische Doppelkammern ausgebildet sind, wobei die beiden Kammern einer Doppelkammer in axialer Richtung aufeinander folgen und hierzu durch eine in radialer Richtung verlaufende Trennwand voneinander getrennt sind.

Eine weitere Ausgestaltung sieht vor, dass der Dämpfungsring eine größere Ausdehnung in axialer als in radialer Richtung aufweist. Die einzelnen Hohlkammern weisen dementsprechend ebenfalls eine größere Ausdehnung in axialer als in radialer Richtung auf, was beispielsweise dadurch erreicht wird, dass sie L-förmig ausgebildet sind. Der längere Abschnitt der L-Form verläuft dabei in axialer Richtung, wobei er zumindest teilweise angrenzend an oder parallel zum ersten Abschnitt der ersten Dämpfungsstruktur verlaufen kann. Es wird darauf hingewiesen, dass Hohlkammern, die eine größere Ausdehnung in axialer Richtung aufweisen, wie beispielsweise L-förmige Hohlkammern, auch als "gefaltete Hohlkammern" bezeichnet werden.

Auch kann eine Ausbildung der Hohlkammern als gefaltete Hohlkammern mit einer Ausbildung der Hohlkammern als symmetrische oder asymmetrische Doppelkammern kombiniert werden, wobei eine Doppelkammer aus z.B. zwei rechteckförmigen oder L-förmigen, sich in entgegengesetzter Richtung axial erstreckenden Kammern gebildet wird.

Eine Hohlkammer ist auf eine bestimmte Frequenz abgestimmt, bei der eine maximale Dämpfung erfolgt. Dabei gilt, dass eine maximale Dämpfung dann erfolgt, wenn die Tiefe der Hohlkammer in etwa gleich einem Viertel der Wellenlänge der akustischen Welle bei der abgestimmten Frequenz ist. Als "Tiefe" der Hohlkammer wird dabei die längste Erstreckung der Hohlkammer betrachtet, die auch eine axiale Erstreckung sein kann. Darin liegt grade der Vorteil von gefalteten Hohlkammern, dass relativ niedrige Dämpfungsfrequenzen trotz einer primär axialen Anordnung der Hohlkammern und einer dadurch geringen Bauhöhe realisiert werden können.

Der Dämpfungsring bzw. die Kammern, die diesen bilden, sind beispielsweise durch einen Faserverbundstoff beispielsweise mit einer Glasfaser- oder Kunststofffaser-Matrix gebildet. Grundsätzlich kann der Dämpfungsring jedoch auch aus anderen Materialien hergestellt sein, da er im Sinne der Erfindung keine strukturellen Aufgaben übernimmt.

Die Erfindung betrifft auch eine Triebwerksgondel, insbesondere eine Triebwerksgondel eines Turbofan-Triebwerks, wobei die Triebwerksgondel eine schalldämpfende Anordnung mit den Merkmalen des Anspruchs 1 aufweist. Dabei ist vorgesehen, dass die erste Dämpfungsstruktur eine schalldämpfende innere Auskleidung der Triebwerksgondel bildet. Die zweite Dämpfungsstruktur ist radial außen der ersten Dämpfungsstruktur in der Triebwerksgondel angeordnet. Die schalldämpfende Anordnung ist hierbei an einem Einlauf oder Einlass ("intake") der Triebwerksgondel vorgesehen, d.h., im Bereich eines Gehäuseteils für den Bläser (Fan) des Triebwerks.

Die Erfindung wird nachfolgend unter Bezugnahme auf die Figuren der Zeichnung anhand mehrerer Ausführungsbeispiele näher erläutert. Es zeigen:
- Figur 1: einen Längsschnitt durch ein erstes Ausführungsbeispiel einer schalldämpfenden Anordnung, die eine erste Dämpfungsstruktur in Form einer Sandwichstruktur und eine zweite ringförmige Dämpfungsstruktur umfasst;
- Figur 2: eine Querschnittsansicht der schalldämpfenden Anordnung der Figur 1;
- Figur 3: schematisch aneinander angrenzende Schichten in Wabenform einer schalldämpfenden Anordnung mit einer Sandwichstruktur gemäß den Figuren 1 und 2;
- Figur 4: eine Schnittansicht eines Ausführungsbeispiels einer schalldämpfenden Anordnung, bei der zwei durch ein perforiertes Septum voneinander getrennte Schichten nicht versetzt zueinander angeordnet sind;
- Figur 5: eine Schnittansicht eines nicht erfindungsgemäßen Ausführungsbeispiels einer schalldämpfenden Anordnung ohne ein perforiertes Septum; und
- Figur 5A: schematisch die Verbindung einzelner Bauteile der schalldämpfenden Anordnung der Figur 5.

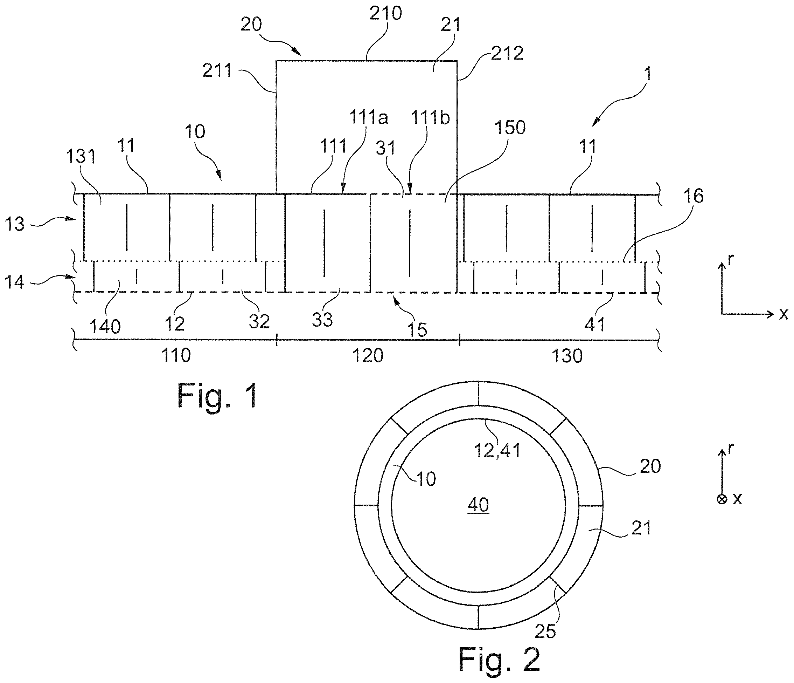

Die Figuren 1 und 2 zeigen ein erstes Ausführungsbeispiel einer schalldämpfenden Anordnung 1 für eine Triebwerksgondel, wobei die Figur 1 einen Längsschnitt entlang der axialen Richtung x und die Figur 2 einen Querschnitt senkrecht zur axialen Richtung x zeigt.

Bezug nehmend auf die Figur 1 umfasst die schalldämpfende Anordnung 1 eine erste Dämpfungsstruktur, die als Sandwichstruktur 10 ausgebildet ist, und eine zweite Dämpfungsstruktur 20, die als ringförmige Dämpfungsstruktur ausgebildet ist. Die Sandwichstruktur 10 besitzt zwei Grenzschichten oder Wände, nämlich eine Außenschicht 11 und eine Innenschicht 12, wobei im in ein Triebwerk eingebauten Zustand die Innenschicht 12 die Innenwand 41 des Einlaufsbereichs einer Triebwerksgondel bildet, die einen Strömungskanal 40 begrenzt, in dem ein Bläser angeordnet ist, vgl. auch die Figur 2.

Die Sandwichstruktur 10 weist mehrere Abschnitte 110, 120, 130 auf, die in axialer Richtung x aufeinanderfolgen. Die ringförmige Dämpfungsstruktur 20 grenzt dabei an den zweiten Abschnitt 120 in radialer Richtung an. Die ringförmige Dämpfungsstruktur 20 kann auch als Dämpfungsring bezeichnet werden.

Die Außenschicht 11 ist durch eine durchgehende Wand gebildet, die lediglich im Bereich der ringförmigen Dämpfungsstruktur 20 teilweise mit Perforationen 31 versehen ist, wie noch ausgeführt werden wird. Die Innenschicht 12 weist ebenfalls Perforationen 32, 33 auf, über die Schallwellen in die absorbierende Struktur 1 eindringen können. Dabei können die Perforationen in den Abschnitten 110, 130 eine andere Größe besitzen als im Abschnitt 120, an den die ringförmige Dämpfungsstruktur 20 grenzt, insbesondere können hier unterschiedliche Lochmuster für die jeweiligen Perforationen vorgegeben sein.

Zwischen der perforierten Innenschicht 12 und der Außenschicht 11 erstreckt sich eine schalldämpfende Wabenstruktur mit Schichten 13, 14 und 15. In den Abschnitten 110 und 130 wird die schalldämpfende Wabenstruktur durch zwei Schichten 13, 14 in Wabenform mit Waben 131, 140 gebildet. Die beiden Schichten 13, 14 sind durch ein perforiertes Septum 16, das in axialer Richtung verläuft, voneinander getrennt. Im Abschnitt 120, an den die ringförmige Dämpfungsstruktur 20 angrenzt, ist eine Wabenstruktur 15 vorgesehen, die nur durch eine Schicht von Waben 150 gebildet ist, die sich von der Innenschicht 12 durchgehend bis zur Außenschicht 11 erstrecken.

Wie bereits angemerkt, ist die Außenschicht 11 als kontinuierliches Gebilde ausgebildet und umfasst einen Abschnitt 111, der mit dem Abschnitt 120 der Sandwichstruktur 10 korrespondiert und an den sich die ringförmige Dämpfungsstruktur 20 anschließt. In diesem Abschnitt 111 sind ein Unterabschnitt 111a vorgesehen, der nicht perforiert ist und ein weiterer Unterabschnitt 111b, der Perforationen 31 aufweist. Die Perforationen 31 sind durch Löcher gebildet, die beispielsweise einen Durchmesser zwischen 2 und 5 mm aufweisen. Sie bilden beispielsweise eine Fläche zwischen 8 und 25 % des Unterabschnitts 111b. Die Löcher werden beispielsweise in die Außenschicht 11 gebohrt, beispielsweise durch Sandstrahlen oder eine Wasserstrahlschneidemaschine, wobei eine Maske eingesetzt werden kann.

Dabei kann vorgesehen sein, dass die Außenschicht 11 im Abschnitt 111, an den die ringförmige Dämpfungsstruktur 20 grenzt, eine größere Dicke aufweist als in den anderen Abschnitten 110, 130. Beispielsweise liegt die Dicke im Abschnitt 120 bei 1 bis 4 mm, während sie in den Abschnitten 110, 130 bei 0,6 bis 1,2 mm liegt. So können sich also z.B. die Lochmuster und die Schichtdicken in den Abschnitten 110 und 120 voneinander unterscheiden.

Die Perforationen 32, 33 in der Innenschicht 12 können im ersten Abschnitt 110 und im zweiten Abschnitt 120 unterschiedliche Größe besitzen oder alternativ gleichgroß ausgebildet sein. Im dargestellten Ausführungsbeispiel weisen die Öffnungen bzw. Perforationen 33 im Abschnitt 110 und im Abschnitt 130 eine geringere Größe auf als im Abschnitt 120. Beispielsweise besitzen die Perforationen 33 im Abschnitt 120 eine Größe zwischen 1 und 2 mm, wobei sie zwischen 5 und 15% der Fläche dieses Abschnitts freigeben.

Auch die Perforation 32, 33 könne beispielsweise über mechanische Verfahren wie Sandstrahlschneiden oder Wasserstrahlschneiden mit oder ohne Maske bereitgestellt werden.

Die ringförmige Dämpfungsstruktur 20 umfasst eine Mehrzahl von Hohlkammern 21, die jeweils ohne eine Wabenstruktur ausgebildet und innen hohl sind. Dabei grenzen eine Mehrzahl von Hohlkammern 21 in Umfangsrichtung der Triebwerksgondel aneinander an, vgl. Figur 2. Die einzelnen Hohlkammern 21 sind dabei durch in axialer Richtung verlaufende, sich radial erstreckende Trennwände 25 voneinander getrennt. Die Anzahl der Hohlkammern 21 ist dabei eher gering und liegt bei beispielsweise drei bis zwanzig.

Die einzelnen Hohlkammern 21 werden radial innen durch die Außenschicht 111 der Sandwichstruktur 10 und radial außen durch eine für Gas undurchlässige Außenwand 210 begrenzt. Sie besitzen weiter eine Vorderseite an einer (Trenn-) Wand 211 und eine Rückseite an einer (Trenn-) Wand 212. Die Hohlkammern 21 bestehen beispielsweise aus einem Faserverbundstoff, beispielsweise einem Faserverbundstoff mit einer Glasfaser-Matrix oder einer Kohlenstofffaser-Matrix.

Wie bereits erwähnt, ist die schalldämpfende Anordnung dazu vorgesehen, den Einlauf einer Triebwerksgondel innenseitig auszukleiden und zu strukturieren. Dementsprechend sind die Sandwichstruktur 10 und die ringförmige Dämpfungsstruktur 20 ringförmig bzw. zylinderförmig bzw. tonnenförmig ausgebildet und erstrecken sich über 360° oder zumindest einen substantiellen Teil davon. Sie weisen dabei eine bestimmte Breite in axialer Richtung x und eine bestimmte Höhe in radialer Richtung r auf. Ebenso sind die Innenschicht 12 und die Außenschicht 11 ringförmig bzw. zylinderförmig bzw. tonnenförmig ausgebildet und erstrecken sich über 360° oder zumindest einen substantiellen Teil davon.

Wie aus der Figur 1 ersichtlich ist, ist die Breite des Abschnitts 120, an den die ringförmige Dämpfungsstruktur 20 angrenzt, geringer als die addierte Breite des ersten und zweiten Abschnitts 110, 130. Die Dicke der Sandwichstruktur 10 ergibt sich durch den Abstand zwischen der Innenschicht 12 und der Außenschicht 11.

Die erste, als Sandwichstruktur 10 ausgebildete Dämpfungsstruktur dient primär der Dämpfung höherfrequenter akustischer Schwingungen insbesondere im Bereich zwischen 500 Hz und 10 kHz. Die ringförmige Dämpfungsstruktur 20 dient primär der Dämpfung von niederfrequenten akustischen Schwingungen im Bereich von unterhalb 500 kHz. Die Dämpfungsstruktur 20 weist beispielsweise Hohlkammern 21 auf, die auf eine Frequenz im Bereich zwischen 300 Hz und 400 Hz abgestimmt sind.

Aufgrund ihrer größeren radialen Ausdehnung ist die ringförmige Dämpfungsstruktur dazu geeignet, niederfrequente akustische Schwingungen zu dämpfen. Dabei kann, wie es in der Figur 1 dargestellt ist, vorgesehen sein, dass die einzelnen Hohlkammern 21 "gefaltet" in dem Sinne sind, dass ihre in axialer Richtung beabstandeten Wände 211, 212 einen größeren Abstand aufweisen als ihre in radialer Richtung beabstandeten Wände bzw. Schichten 111, 210 und einen Resonanzraum zur Schallabsorption bereitstellen. Dementsprechend ist es nicht zwingend erforderlich, dass die Perforation 31 der Außenschicht 11 im Abschnitt 120 der Sandwichstruktur in diesem gesamten Abschnitt perforiert ist. Wie dargestellt, kann die Perforation 31 auch nur in dem Unterabschnitt 111b erfolgen. Über diesen Unterabschnitt 111b erfolgt die Schalleinkopplung in die Hohlkammer 21.

Die Einkopplung akustischer Wellen erfolgt dabei über die Perforationen 33 der Innenschicht 12 im Abschnitt 120 der Sandwichstruktur 10, die sich von der Innenschicht 12 zur Außenschicht 11 durchgehend erstreckenden Waben 150 der Schicht 15 und die Perforationen 31 im Unterabschnitt 111b der Außenschicht 11. Dadurch, dass die Perforationen 31 relativ groß ausgebildet sind sowie dadurch, dass die Außenschicht 11 im Abschnitt 120 dicker ausgebildet ist als in den Abschnitten 110, 130, wird eine vergrößerte träge Masse aus Luft und Material der Außenschicht bereitgestellt, die als Filter für höhere Frequenzen wirkt, so dass in verstärktem Maße nur die zu absorbierenden tieferen Frequenzen in die ringförmige Dämpfungsstruktur 20 gelangen. Die mittleren und höheren Frequenzen akustischen Lärms werden durch die Sandwichstruktur 10 absorbiert.

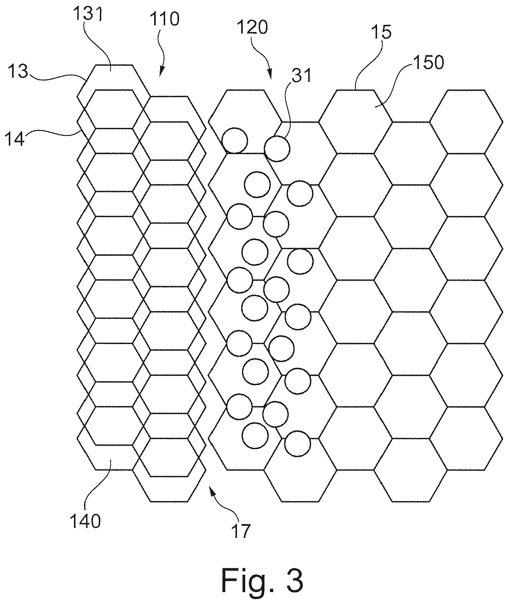

Die Figur 3 zeigt schalldämpfende Wabenstrukturen einer Sandwichstruktur 10 gemäß der Figur 1, wobei die Innenschicht 12 und die Außenschicht 11 nicht dargestellt sind. Von der Außenschicht 11 sind lediglich die Perforationen 31 bzw. Öffnungen wiedergegeben.

Es ist erkennbar, dass die Sandwichstruktur 10 im Abschnitt 110 aus zwei Schichten 13, 14 in Wabenform mit Waben 131, 140 besteht. Dabei sind die jeweiligen Zellen bzw. Waben 131, 140 zueinander versetzt angeordnet. Im Abschnitt 120, an den die ringförmige Dämpfungsstruktur 20 angrenzt, ist nur eine Schicht 15 in Wabenform vorgesehen, deren Waben 150 sich durchgehend von der Innenschicht zur Außenschicht erstrecken. In den Schichten 13, 14 können auch separate Waben zueinander versetzt angeordnet sein, während in dem Abschnitt 120 eine durchgehende Wabenstruktur vorgesehen ist. Es wird darauf hingewiesen, dass die schematisch dargestellten Perforationen 31 der Außenwand, die in diesem Abschnitt 120 ausgebildet sind, im Hinblick auf Anzahl und Abstand zueinander nicht mit Anzahl und Abstand der einzelnen Zellen bzw. Waben 150 der Schicht 15 übereinstimmen, sondern vielmehr eine von der Wabenstruktur abweichende Anordnung und Beabstandung ausbilden. Dabei kann vorgesehen sein, dass die Perforationen 31 bzw. Öffnungen ein anderweitiges Muster als die Waben 150 aufweisen oder pseudostatistisch, ohne konkretes Muster, ausgebildet sind.

Weiter kann vorgesehen sein, dass ein Zwischenbereich 17 zwischen der doppellagigen Struktur im Abschnitt 110 und der einlagigen Struktur im Abschnitt 120 vorgesehen ist, in dem die doppellagige Struktur in eine einlagige Struktur überführt wird.

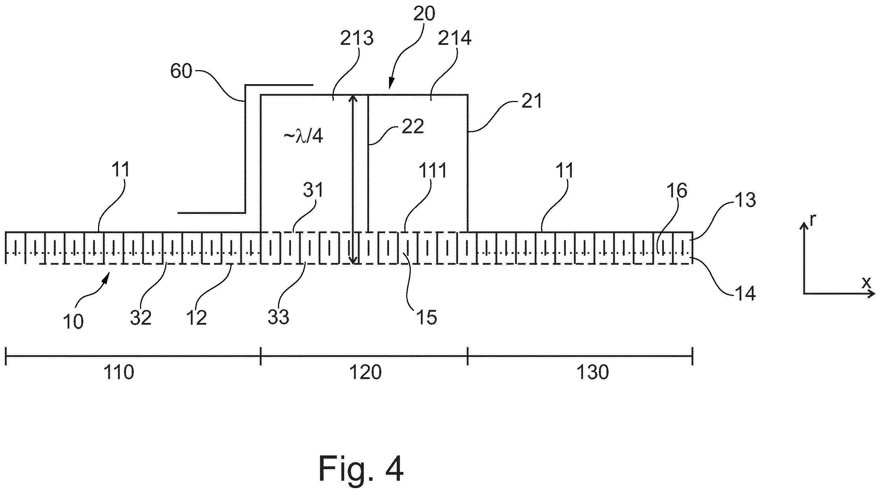

Die Figur 4 zeigt eine Ausführungsvariante der Anordnung der Figur 1, bei der die einzelnen Hohlkammern 21 der ringförmigen Dämpfungsstruktur 20 jeweils als symmetrische oder nicht symmetrische Doppelkammern mit zwei (Einzel-) Kammern 213, 214 ausgebildet sind, die durch eine sich in radialer Richtung erstreckende Trennwand 22 voneinander getrennt sind. Die Trennwand 22 ist ebenso wie die Hohlkammern 21 beispielsweise aus einem Faserverbundstoff gebildet.

Die ringförmige Dämpfungsstruktur 20 kann durch eine schematisch dargestellte Faserlage 60 zusätzlich an der Außenschicht 11 der Sandwichstruktur 10 gesichert sein. Dies gilt auch für die anderen Ausführungsbeispiele. Im Übrigen wird die Dämpfungsstruktur 20 beispielsweise durch Kleben an der Außenschicht 11 befestigt.

In der Figur 4 ist dargestellt, dass die radiale Höhe einer als Doppelkammer ausgebildeten Hohlkammer 21 bzw. der beiden symmetrischen Einzelkammern 213, 214 bei etwa λ/4 der Wellenlänge liegt, die der Frequenz entspricht, auf die die Hohlkammer abgestimmt ist, d. h. bei der sie ihre größte Absorption aufweist. So hat sich herausgestellt, dass ein Abstand von λ/4 am geeignetsten ist, bei Schallwellen mit der Wellenlänge λ eine Absorption herbeizuführen.

Es wird darauf hingewiesen, dass beim Ausführungsbeispiel der Figur 4 Perforationen 31 über den gesamten Abschnitt 111 der Außenschicht 11 ausgebildet sind. Ansonsten entspricht der Aufbau der Sandwichstruktur 10 demjenigen der Figur 1.

In einer abgewandelten Ausführungsvariante der Figur 4 wird von der Realisierung der inneren Trennwand 25 abgesehen.

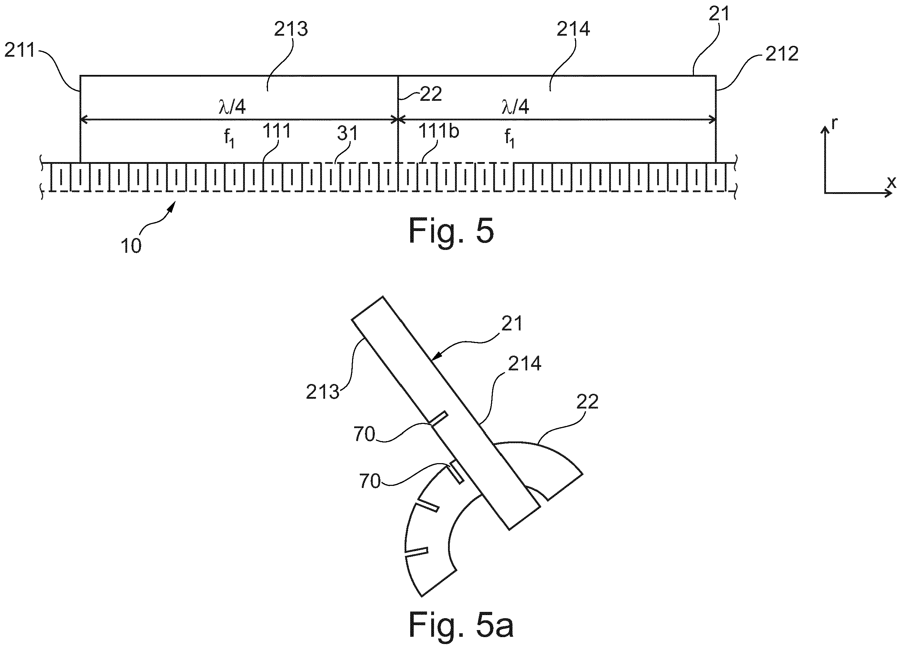

Die Figur 5 zeigt eine weitere Ausführungsvariante der Anordnung der Figur 1, bei der die Hohlkammern 21 ebenfalls als Doppelkammern mit Einzelkammern 213, 214 ausgebildet sind, dabei jedoch eine größere Ausdehnung in axialer Richtung x als in radialer Richtung r aufweisen. Jede Doppelkammer mit den Einzelkammern 213, 214 bildet dabei in axialer Richtung einen Resonanzraum der Länge λ/4 zwischen den (Trenn-) Wänden 211 und 22 bzw. zwischen den (Trenn-) Wänden 22 und 212. Dabei können die beiden Doppelkammern auf die gleiche Frequenz f₁ oder alternativ auf unterschiedliche Frequenzen f₁, f₂ abgestimmt sein, wobei sie im letzteren Fall eine unterschiedliche Länge in axialer Richtung aufweisen.

Perforationen 31 sind bei der Ausführungsvariante der Figur 5 nur in einem Unterabschnitt 111b des Abschnitts 111 der Außenwand ausgebildet, so dass die Perforationen 31 sich nur entlang eines Teilabschnitts der Einzelkammern 213, 214 erstrecken. Die Anordnung der Doppelkammern wird auch als gefaltet bezeichnet, da die größere Erstreckung in axialer Richtung erfolgt. Nichtsdestotrotz können über die Perforationen 31 eingekoppelte Schallwellen der Wellenlänge λ bzw. der Frequenz f sowie angrenzender Frequenzen über einen bestimmten Spektralbereich gedämpft werden. Wie bereits erwähnt, können die Einzelkammern 213, 214 auch auf unterschiedliche Frequenzen abgestimmt sein.

Es wird darauf hingewiesen, dass beim Ausführungsbeispiel der Figur 5 die Sandwichstruktur 10 insgesamt einlagig ausgebildet ist.

Die Figur 5A zeigt schematisch und beispielhaft die Verbindung einer Trennwand 22, die sich in Umfangsrichtung erstreckt, mit einer symmetrischen Doppelkammer. Die Verbindung zwischen der Trennwand 22 und der Doppelkammer wird in einfacher Weise durch gesteckte Verbindungen hergestellt, die über Schlitze 70 realisiert werden.

Die Erfindung beschränkt sich in ihrer Ausgestaltung nicht auf die vorstehend dargestellten Ausführungsbeispiele. Beispielsweise sind Form und Größe der Hohlkammern der ringförmigen Dämpfungsstruktur lediglich beispielhaft zu verstehen und können diese in alternativen Ausgestaltungen in anderer Weise ausgebildet sein. Gleiches gilt für die Ausgestaltung der Sandwichstruktur.

## Patentansprüche

1. Schalldämpfende Anordnung (1) für eine Triebwerksgondel, die aufweist:
- eine erste Dämpfungsstruktur (10), die zwischen einer perforierten Innenschicht (12) und einer Außenschicht (11) eine schalldämpfende Wabenstruktur umfasst, wobei die erste Dämpfungsstruktur (10) einen ersten Abschnitt (110) und einen zweiten Abschnitt (120) aufweist, die in axialer Richtung hintereinander angeordnet sind, und
- eine zweite Dämpfungsstruktur (20), die ringförmig ausgebildet ist und im zweiten Abschnitt (120) der ersten Dämpfungsstruktur (10) in radialer Richtung außen an diese angrenzt,
wobei
- die zweite Dämpfungsstruktur (20) durch mehrere Hohlkammern (21) gebildet ist, die in Umfangsrichtung aneinander angrenzen, wobei die Hohlkammern (21) ohne eine Wabenstruktur ausgebildet sind,
- die Wabenstruktur der ersten Dämpfungsstruktur (10) in dem zweiten Abschnitt (120), an den die zweite Dämpfungsstruktur (20) angrenzt, einen anderen Aufbau besitzt als im ersten Abschnitt (110), wobei die Wabenstruktur der ersten Dämpfungsstruktur (10) hierzu im ersten Abschnitt (110) zwischen der Innenschicht (12) und der Außenschicht (11) mindestens zwei Schichten (13, 14) in Wabenform aufweist, die durch ein perforiertes Septum (16) voneinander getrennt sind,
**dadurch gekennzeichnet, dass**
die Hohlkammern (21) in Umfangsrichtung durch sich radial erstreckende und in axialer Richtung verlaufende Trennwände (25) voneinander getrennt sind.

2. Anordnung nach Anspruch 1, **dadurch gekennzeichnet, dass** die Waben (131, 140) in den beiden durch das perforierte Septum voneinander getrennten Schichten (13, 14) versetzt zueinander angeordnet sind.

3. Anordnung nach einem der vorangehenden Ansprüche, **dadurch gekennzeichnet, dass** die Wabenstruktur der ersten Dämpfungsstruktur (10) in dem zweiten Abschnitt (120), an den die zweite Dämpfungsstruktur (20) angrenzt, zwischen der Innenschicht (12) und der Außenschicht (11) genau eine Schicht (15) in Wabenform ausbildet, deren Waben (150) sich von der Innenschicht (12) bis zur Außenschicht (11) durchgehend erstrecken.

4. Anordnung nach einem der vorangehenden Ansprüche, **dadurch gekennzeichnet, dass** die Außenschicht (11) der ersten Dämpfungsstruktur (10) im zweiten Abschnitt (120), an den die zweite Dämpfungsstruktur (20) angrenzt, zumindest teilweise mit Perforationen (31) versehen ist.

5. Anordnung nach Anspruch 4, **dadurch gekennzeichnet, dass** die Perforationen (31) als Löcher mit einem Durchmesser zwischen 2 mm und 5 mm ausgebildet sind und/oder dass die Perforationen (31) zwischen 8% und 25% der Fläche der Außenschicht (11) der ersten Dämpfungsstruktur (10) im perforierten Abschnitt ausmachen.

6. Anordnung nach Anspruch 4, soweit rückbezogen auf Anspruch 3, **dadurch gekennzeichnet, dass** die Perforationen (31) in der Außenschicht (11) der ersten Dämpfungsstruktur (10) eine Anordnung aufweisen, die nicht mit der Anordnung der Waben (150) der Schicht (15) in Wabenform übereinstimmt.

7. Anordnung nach einem der vorangehenden Ansprüche, **dadurch gekennzeichnet, dass** die Außenschicht (11) der ersten Dämpfungsstruktur (10) in dem zweiten Abschnitt (120), an den die zweite Dämpfungsstruktur (20) angrenzt, ein größere Dicke aufweist.

8. Anordnung nach einem der vorangehenden Ansprüche, soweit rückbezogen auf Anspruch 4, **dadurch gekennzeichnet, dass** die perforierte Innenschicht (12) der ersten Dämpfungsstruktur (10) in dem zweiten Abschnitt (120), an den die zweite Dämpfungsstruktur (20) angrenzt, Perforationen (33) aufweist, die eine kleinere Größe besitzen als die in der Außenschicht (11) ausgebildeten Perforationen (31).

9. Anordnung nach einem der vorangehenden Ansprüche, **dadurch gekennzeichnet, dass** die Hohlkammern (21) als symmetrische oder asymmetrische Doppelkammern ausgebildet sind und hierzu jeweils eine in radialer Richtung verlaufende Trennwand (22) aufweisen und/oder dass die zweite Dämpfungsstruktur (20) eine größere Ausdehnung in axialer als in radialer Richtung aufweist.

10. Anordnung nach einem der vorangehenden Ansprüche, **dadurch gekennzeichnet, dass** die zweite Dämpfungsstruktur (20) durch einen Faserverbundstoff mit einer Glasfaser- oder Kohlenstofffaser-Matrix gebildet ist.

11. Triebwerksgondel, insbesondere eines Turbofan-Triebwerks, mit einer schalldämpfenden Anordnung (1) mit den Merkmalen des Anspruchs 1, wobei die erste Dämpfungsstruktur (10) eine schalldämpfende innere Auskleidung der Triebswerksgondel bildet und die zweite Dämpfungsstruktur (20) radial außen der ersten Dämpfungsstruktur in der Triebwerksgondel angeordnet ist.

## Claims

1. Sound-absorbing arrangement (1) for an engine nacelle, having
- a first damping structure (10) that comprises a sound-damping honeycomb structure between a perforated inner layer (12) and an outer layer (11), wherein the first damping structure (10) has a first section (110) and a second section (120) which are arranged one behind the other in the axial direction, and
- a second damping structure (20) that is annularly designed and adjoins the first damping structure (10) in the second section (120) of the same externally in the radial direction,
wherein
- the second damping structure (20) is formed by several hollow chambers (21) adjacent to one another in the circumferential direction, wherein the hollow chambers (21) are formed without a honeycomb structure,
- the honeycomb structure of the first damping structure (10) has a different design in the second section (120), which is adjoined by the second damping structure (20), than in the first section (110), wherein in the first section (110) between the inner layer (12) and the outer layer (11), the honeycomb structure of the first damping structure (10) has at least two layers (13, 14) in honeycomb shape that are separated from one another by a perforated septum (16),
**characterized in that**
the hollow chambers (21) are separated from one another in the circumferential direction by separation walls (25) extending radially and in the axial direction.

2. Arrangement in accordance with Claim 1, **characterized in that** the honeycombs (131, 140) in the two layers (13, 14) separated from one another by the perforated septum are arranged offset to one another.

3. Arrangement in accordance with one of the preceding Claims, **characterized in that,** between the inner layer (12) and the outer layer (11) in the second section (120) that is adjoined by the second damping structure (20), the honeycomb structure of the first damping structure (10) forms exactly one layer (15) in honeycomb shape, which has honeycombs (150) that extend continuously from the inner layer (12) to the outer layer (11).

4. Arrangement in accordance with one of the preceding Claims, **characterized in that,** in the second section (120) that is adjoined by the second damping structure (20), the outer layer (11) of the first damping structure (10) is at least partially provided with perforations (31).

5. Arrangement in accordance with Claim 4, **characterized in that** the perforations (31) are formed as holes having a diameter between 2 mm and 5 mm, and/or the perforations (31) constitute between 8% and 25% of the surface of the outer layer (11) of the first damping structure (10) in the perforated section.

6. Arrangement in accordance with Claim 4, when dependent on Claim 3, **characterized in that** the perforations (31) in the outer layer (11) of the first damping structure (10) have an arrangement that does not correspond to the arrangement of the honeycombs (150) of the layer (15) in honeycomb shape.

7. Arrangement in accordance with one of the preceding Claims, **characterized in that** the outer layer (11) of the first damping structure (10) has a greater thickness in the second section (120) that is adjoined by the second damping structure (20).

8. Arrangement in accordance with one of the preceding Claims, when dependent on Claim 4, **characterized in that,** in the second section (120) that is adjoined by the second damping structure (20), the perforated inner layer (12) of the first damping structure (10) has perforations (33) that have a smaller size than the perforations (31) that are formed in the outer layer (11).

9. Arrangement in accordance with one of the preceding Claims, **characterized in that** the hollow chambers (21) are designed as symmetrical or asymmetrical double chambers and for this purpose have respectively one separation wall (22) that extends in the radial direction, and/ or that the second damping structure (20) has a larger extension in the axial than in the radial direction.

10. Arrangement in accordance with one of the preceding Claims, **characterized in that** the second damping structure (20) is formed by a fiber-composite material comprising a glass fiber or carbon fiber matrix.

11. Engine nacelle, in particular of a turbofan engine, having a sound-absorbing arrangement (1) with the features of Claim 1, wherein the first damping structure (10) forms a sound-damping inner lining of the engine nacelle and the second damping structure (20) is arranged inside the engine nacelle radially outside the first damping structure.

## Revendications

1. Agencement amortissant le bruit (1) pour une nacelle de moteur, qui présente:
- une première structure d'amortissement (10) qui comprend, entre une couche intérieure (12) perforée et une couche extérieure (11), une structure alvéolaire amortissant le bruit, sachant que la première structure d'amortissement (10) présente une première section (110) et une seconde section (120) qui sont disposées l'une derrière l'autre dans le sens axial, et
- une seconde structure d'amortissement (20) de forme annulaire qui, dans la seconde section (120) de la première structure d'amortissement (10), avoisine celle-ci à l'extérieur dans le sens radial,
sachant que
- la seconde structure d'amortissement (20) est formée de plusieurs chambres creuses (21) qui sont adjacentes les unes aux autres dans le sens circonférentiel, sachant que les chambres creuses (21) sont conçues sans structure alvéolaire,
- la structure alvéolaire de la première structure d'amortissement (10) dans la seconde section (120) qu'avoisine la seconde structure d'amortissement (20) possède une autre construction que dans la première section (110), sachant que la structure alvéolaire de la première structure d'amortissement (10) présente, pour cela dans la première section (110) entre la couche intérieure (12) et la couche extérieure (11), au moins deux couches (13, 14) de forme alvéolaire qui sont séparées l'une de l'autre par un septum perforé (16),
**caractérisé en ce que**
les chambres creuses (21) sont séparées les unes des autres dans le sens circonférentiel par des cloisons (25) s'étendant radialement et dans le sens axial.

2. Agencement selon la revendication n° 1, **caractérisé en ce que** les alvéoles (131, 140) dans les deux couches (13, 14) séparées l'une de l'autre par le septum perforé sont disposées décalées les unes des autres.

3. Agencement selon une des revendications précédentes, **caractérisé en ce que** la structure alvéolaire de la première structure d'amortissement (10) dans la seconde section (120) qu'avoisine la seconde structure d'amortissement (20) constitue exactement une couche (15) de forme alvéolaire, entre la couche intérieure (12) et la couche extérieure (11), dont les alvéoles (150) s'étendent en continu de la couche intérieure (12) à la couche extérieure (11).

4. Agencement selon une des revendications précédentes, **caractérisé en ce que** la couche extérieure (11) de la première structure d'amortissement (10) dans la seconde section (120) qu'avoisine la seconde structure d'amortissement (20) est pourvue de perforations (31), au moins partiellement.

5. Agencement selon la revendication n° 4, **caractérisé en ce que** les perforations (31) sont constituées sous forme de trous d'un diamètre compris entre 2 mm et 5 mm et/ ou que les perforations (31) représentent entre 8 % et 25 % de la surface de la couche extérieure (11) de la première structure d'amortissement (10) dans la section perforée.

6. Agencement selon la revendication n°4, lorsqu'elle dépend de la revendication n° 3, **caractérisé en ce que** les perforations (31) dans la couche extérieure (11) de la première structure d'amortissement (10) présentent une disposition qui ne concorde pas avec la disposition des alvéoles (150) de la couche (15) de forme alvéolaire.

7. Agencement selon une des revendications précédentes, **caractérisé en ce que** la couche extérieure (11) de la première structure d'amortissement (10) dans la seconde section (120) qu'avoisine la seconde structure d'amortissement (20) présente une épaisseur supérieure.

8. Agencement selon une des revendications précédentes, lorsque celle-ci dépend de la revendication n° 4, **caractérisé en ce que** la couche intérieure perforée (12) de la première structure d'amortissement (10) dans la seconde section (120) qu'avoisine la seconde structure d'amortissement (20) présente des perforations (33) qui possèdent une taille inférieure aux perforations (31) formées dans la couche extérieure (11).

9. Agencement selon une des revendications précédentes, **caractérisé en ce que** les chambres creuses (21) sont conçues sous forme de chambres doubles symétriques ou asymétriques et présentent pour cela chacune une cloison (22) s'étendant dans le sens radial et/ ou que la seconde structure d'amortissement (20) présente une plus grande extension dans le sens axial que dans le sens radial.

10. Agencement selon une des revendications précédentes, **caractérisé en ce que** la seconde structure d'amortissement (20) est constituée d'un matériau composite renforcé par des fibres ayant une matrice en fibres de verre ou en fibres de carbone.

11. Nacelle de moteur, particulièrement d'un turboréacteur à soufflante, dotée d'un agencement amortissant le bruit (1) selon les caractéristiques de la revendication n° 1, sachant que la première structure d'amortissement (10) forme un habillage intérieur de la nacelle de moteur, amortissant le bruit et que la seconde structure d'amortissement (20) est disposée radialement à l'extérieur de la première structure d'amortissement dans la nacelle de moteur.
